# EUROPEAN PATENT APPLICATION

(11) **EP 1 291 048 A2**
(43) Date of publication of application: **12.03.2003**
(21) Application number: 02256044.5
(22) Date of filing: 30.08.2002
(51) Int. Cl.: A63F 13/00

(54) **Mobile gaming**

(30) Priority: 05.09.2001 GB 0121457
(71) Applicant: Nokia Corporation, 02150 Espoo (FI)
(72) Inventor: Graham, Thomas, Cambereley, Surrey GU15 1QS (GB)
(74) Representative: Jones, Kendra Louise

(57) **Abstract**

The invention presents a games management system for an electronic game, the system comprising a data portion associated with the electronic game including data indicative of one or more operating requirements for playing the game, and a comparator for comparing the data against a handset specification so as to determine whether the handset can support the game.

The data portion is embodied in a software specification in the form of a 'Play Card' which defines the product and/or server requirements for that particular game. Depending on whether the customer handset details are stored on a server or direct in the handset, when a game session is attempted, the server or handset will check the 'Play Card' against the handset and connected server specifications. Only when an acceptance is received will the game session commence for that handset.

## Description

The present invention relates to electronic games and in particular to electronic games in the context of mobile gaming.

Against this background, the present invention in one aspect resides in a games management system for an electronic game, the system comprising a data portion associated with the electronic game including data indicative of one or more operating requirements for playing the game, and
a comparator for comparing the data against a handset specification so as to determine whether the handset can support the game.

According to a preferred form of the invention, each electronic game that is developed includes as a data portion most conveniently implemented in a software specification in the form of a 'Play Card' which defines the product and/or server requirements for that particular game. Depending on whether the customer handset details are stored on a server or direct in the handset, when a game session is attempted, the server or handset will check the 'Play Card' against the handset and connected server specifications. Only when an acceptance is received will the game session commence for that handset.

So for example if an end user chooses to download a game from a server (e.g. Club Nokia), then as a precursor, the game's Play Card is transmitted to the handset and the handset carries out a check of whether it can support the execution of the game by comparing the Play Card against the handset's performance characteristics. Alternatively, the handset's performance characteristics may be held in the server, (e.g. as part of a previously completely Club Nokia registration process the server may have a membership number or IMEI), and when a game is chosen by an end user the server first carries out a check of the handset's performance characteristics against the game's playcard.

Different models of mobile phone handsets typically have different specifications, for instance in relation to key controls, display resolutions, sound features etc. Furthermore, mobile phone handsets are not primarily designed for playing games. This presents a difficulty of compatibility. Taking for example a situation in which one end user wishes to start a multi-player gaming session with his friend, a second end user. It is unlikely that the first end user will know the specification of the handset of his friend's phone, so if he requests a game session with his friend and transmits the game to his friend, there is no way of checking if his friend's handset is compatible with the game, i.e. there is no way of checking if his friend's handset can support the execution of the game. By means of the game management system of the present invention, it is possible to determine compatibility of a game with an given handset and hence an end user can play electronic games with other end user's who may have different manufacturers' handsets running from different game server platforms.

This represents a more desirable solution than defining a standardised handset specification for all handsets for games, which would seek to standardise aspects such as key layouts and specific displays, and which would need to be slavishly followed in order for any handset to support the playing of electronic games.

Thus the invention addresses difficulties faced in achieving compatibility between electronic games and mobile devices.

The invention extends to areas concerned with client-server systems and the downloading and more generally enabling the provision of content for a client terminal.

Other aspects and features of the invention are defined in the appended claims.

In order to aid a better understanding of the present invention, embodiments of the invention will now be described. These should not be construed as limiting the invention but merely as examples of specific ways of putting the invention into effect. In particular, the invention will be described with reference to the accompanying drawings in which:
Figure 1 is a schematic of client-server system in accordance with a preferred arrangement of the present invention;
Figure 2 is a schematic representation of one embodiment of the present invention;
Figure 3 is a flowchart outlining one arrangement of the present invention; and
Figure 4 is a flowchart outlining a further arrangement of the present invention;
Figure 5 is a flowchart outlining a further arrangement of the present invention;
Figure 6 is a flowchart outlining a further arrangement of the present invention;
Figure 7 a flowchart outlining a further arrangement of the present invention; and
Figure 8 is a schematic representation of a further embodiment of the present invention.

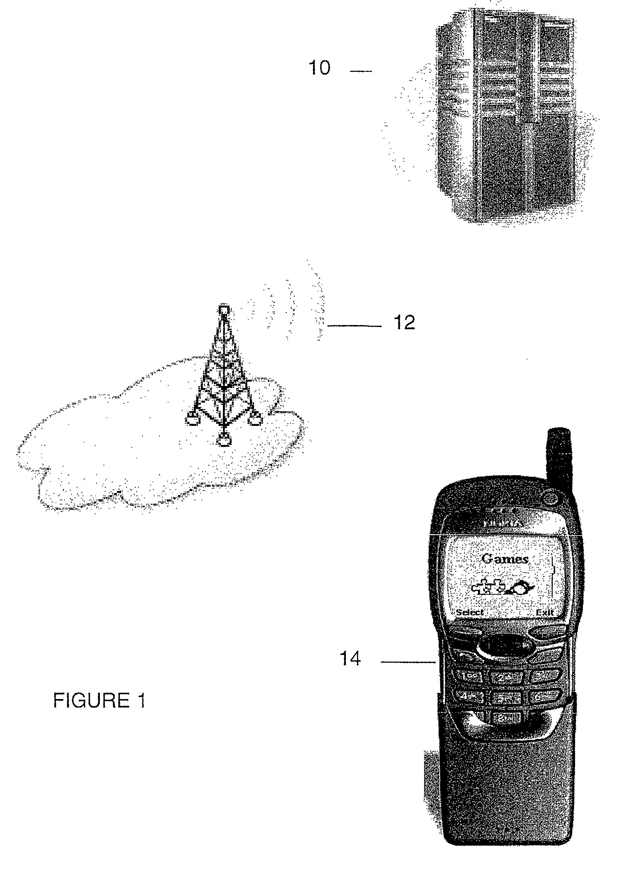

Figure 1 outlines three entities of the present invention, namely a server 10 that holds content for downloading, an end user's mobile phone 12 that is able to download the content, and an operator network 14 that provides a telecommunications service to the mobile phone 12. The server 10 has a unique URL address and using this can be accessed by the end user through the mobile phone 12 which may be WAP, iMODE, 2.5 or 3G enabled, and which is equipped for mobile gaming.

Mobile gaming is a term used to refer to all aspects of electronic games in the context of mobile communications. It is not uncommon nowadays for mobile phones to have, pre-loaded on a memory of the phone, content relating to one or more electronic games. The games can be played on the mobile phone using the phone's processor to run the game and through the phone's User Interface (UI) normally involving the use of the display and one or more of the keys. In order to play a game, the end user navigates through the phone's various main menu options to the Games option and then selects the particular electronic game he or she wishes to play. Certain keys of the mobile phone's keypad are pre-assigned for enabling the end user to control certain predetermined features of the game, usually in relation to other features of the game which are under the control of the software of the game. In this way, the end user can be regarded as playing 'against the computer'. Additionally, in a two (or more) player game, each end user (player) has control over his/her particular game's characters or features with which he/she plays against the other player(s) in a multi-player session.

Typically, an electronic game which is designed to be played on a mobile phone platform is created by a content provider, who may be the mobile phone manufacturer or a third party. Like any platform wishing to execute games software of an electronic game, the mobile phone makes use of its memory for storing the game and its processor for running the game. The electronic game function comprises a games engine that provides the general functions of the game including instructions and routines for gameplay, for example by drawing on library functions that define how games characters may interact during game play. The electronic game also has gaming parameters that set out the environmental factors that define the backdrop to the game. Then there are gaming parameters relating to characters of the games, these being entities of the game under end user control and with which the end user during gameplay associates himself, for instance a team in a sports game, or a fighter in a combat game. In the games content, a combination of these factors define the look and feel of the game, its characters, its objectives, its rules of operation.

In order to afford variation in gameplay, in-built into the games software, typically, is the ability to have different levels of gameplay ranging in complexity. This is usually implemented in the software by making changes to characters, features, aspects and other parameters of the basic gameplay. The content provider may additionally create new levels and/or versions for the game. When new levels and/or versions are applied to the game it modifies the games content. Modified games content has associated with it an identifier tag that identifies the version that has been used in its construction. Typically, as the content provider continues to design and develop more challenging and innovative versions of the games, so the end user continues to remain interested and engaged. In addition, when these new levels are provided on an internet website for downloading therefrom, the mobile phone manufacturer or content provider benefits in increased traffic and stimulating content for the website.

The mobile phone manufacturer may embed the games content onto the phone during manufacture, or authorise downloading of the games content onto the phone.

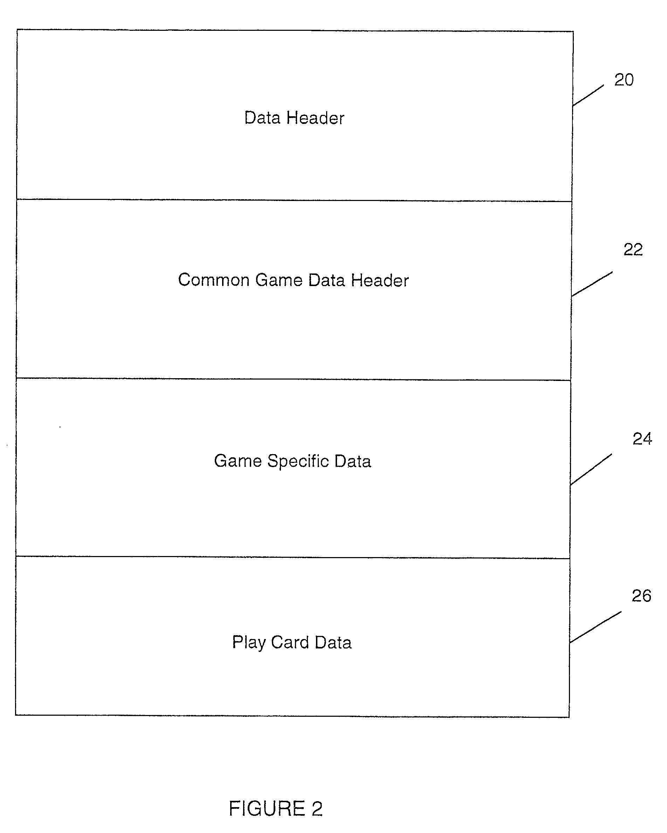

As indicated previously, the present invention sets out to facilitate the playing of electronic games across different handsets. In the context of a preferred form of the present invention, there is provided a games management system comprising a games software specification defining the requirements for the game which is embodied in a 'Play Card'. The Play Card sets out the performance characteristics that are required to execute the game. The Play Card is a feature of the games software, and may be included for example as part of the games data structure. Figure 2 provides a representation of the possible games data structure. It shows:
- a Data Header 20 that provides generic control of the game including routing of game in a phone;
- a Common Game Data Header which defines Digital Rights issues and Games engine identity;
- Game Specific data which provides the instructions for gameplay;
- a Play Card Data which sets out the requirements for executing the games software.

In setting out system requirements, a Play Card may contain indications relating to some or all of the following types of fields:
a. Required key controls (left, right, up, down, analogue, multiple key presses, extra game controls);
b. Required display (size, colour depth, refresh rate, graphic handling for 2-D, 3-D etc., vector or pixel graphics);
c. Required sound control (sound card, stereo, samples, memory);
d. Digital rights management support (licensing system);
e. Security levels;
f. Bluetooth support (peer to peer, multi-user);
g. Mobile internet support (WAP version, xHTML, cHTML etc);
h. Game environment (MIDP Java, EPOC etc.. and version);
i. Memory (available volatile and non-volatile, in-built, memory card (format);
j. Server platform (platform ID, type, support for game, capacity);
k. Operator (portal service ID); service provider;
l. Billing system (packet, air-time, subscription, credit card, paid/unpaid/free);
m. Associated feature access requirements (phonebook, browser, music player, messaging;
n. Location checks based on local positioning information in a game that uses location information;
o. Game version, identifying whether the games are compatible in that they are the same versions;
p. Accessories

Additionally, in preferred forms of the invention the games management system includes a comparator controlled in accordance with an algorithm that when executed performs a comparison between a given handset specification and a given Play Card in order to determine compatibility therebetween. In preferred forms of the invention the comparator is implemented in a software module.

The present invention provides a number of different arrangements by which the games management system incorporating the Play Card can be deployed.

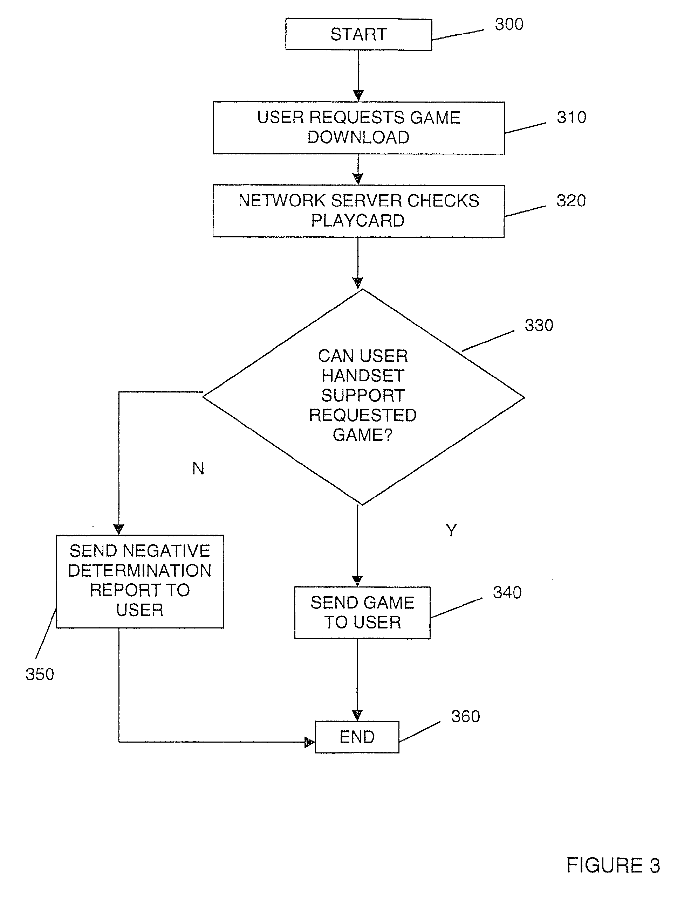

In one arrangement, the games management system is located in a games server residing in a network. The present invention embraces a variety of different situations in which the games management system located in a network server is called upon. In one situation, an end user requests to obtain from the network server a game which the end user wishes to play on his handset device. This situation is illustrated in Figure 3, wherein initially the end user sends a request to the network server for the games file to be downloaded, this is indicated at block 310 in Figure 3. In response to the request, the network server at block 320 carries out a check of the handset performance capabilities against the Play Card associated with the requested game. Accordingly, the network server invokes the games management system to check the game's Play Card. The server has knowledge of the requesting handset's capabilities either by reading a handset specification tag which is transmitted along with the signal requesting the games download, or because the end user's handset details have already been stored in the network games server as a result of the completion of a registration process by the end user at some previous point in time. According to block 320 in Figure 3, the games management system invokes the comparator and associated algorithm to determine whether the end user's handset can run the requested game. If it determines that the handset is capable of supporting the requested game it grants the downloading of the games file to the end user's handset as given by block 340 in Figure 3. If however the games management system determines that the handset is not capable of supporting the requested game the network server sends a message to the end user's handset reporting this event as indicated at block 350 in Figure 3. Flow ends at block 360.

In a different situation but still with the games management system being located in the network server, an end user may register with the network server his availability to play a particular game or games in general, for example on a particular day. With a multiplicity of end users registering with the games server in the same way, the network games server compiles a play list of those end users who have indicated their desire to take part in a global game competition. When an end user registers with the network games server the games server invokes the games management system to check the compatibility of the end user's handset against the Play Card of the game intending to be the game played in the global game competition. If an end user's handset cannot support the game, a message is sent to the end user indicating this to him. If the games management system determines compliance of the handset, the network server registers the handset onto the play list. The network server thereby compiles a play list of end users wishing to play a global game. Once the server has a suitable play list the server initiates the global game competition by pushing a selected game to the end users on the play list. This is particularly useful in GPRS and 3G systems in which a end user's terminal may be 'always on'.

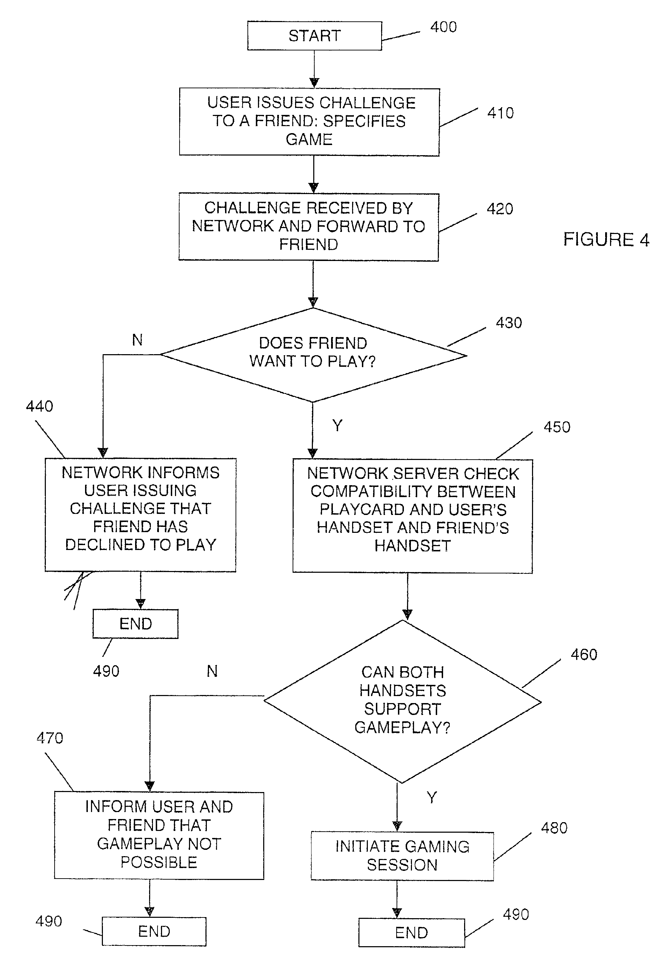

In another situation, but still with the games management system being located in the network server, a first end user (herein termed User A) may wish to play an electronic game directly against a second end user (herein termed User B), with the network game server supporting the game play across the network. This situation is illustrated in Figure 4. At block 410, User A transmits a challenge to User B to play a selected game. The network receives the request and sends the challenge to User B who at block 430 confirms whether or not he would like to play the game. If the response is no, the network sends a message to User A indicating the same, as given by block 440. If User B's response is yes he would like to play the game against user A, the network server at block 450 utilises the games management system to check User A's handset capability to play the requested game and User B's capability to play the requested game by comparing each respective handset specification with the Play Card for the selected game, as indicated at block 460. If one or both of the handsets cannot gameplay the network at block 470 issues a message accordingly. If the network server determines that the handsets' of User A and User B both can support the game it will initiate the game play between the two end users as indicated at block 480. Flow ends at block 490.

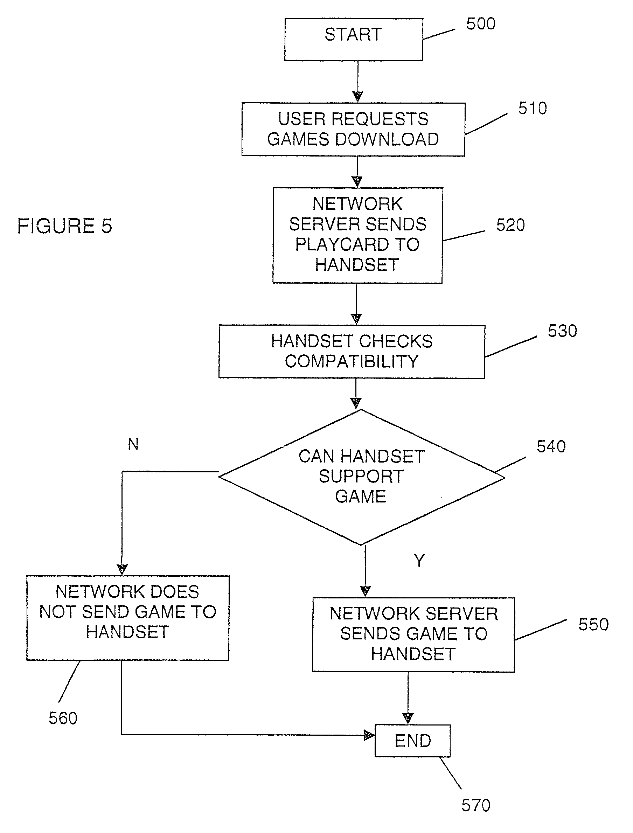

In an alternative arrangement, a portion of the games management system is located in an end user's handset. The portion of the games management system that is located in the end user's handset is the comparator along with the controlling algorithm. One situation within the context of this arrangement is illustrated in Figure 5, where at block 510 an end user requests a games download from a server and the server locates that requested game and pulls down the Play Card associated with the game. At block 520 the server transmits the Play Card to the end user's handset and the handset at block 530 checks whether it can support the game play by comparing the handset specification with the Play Card, as given by block 540. A signal is then returned to the network games server indicating a determination of whether or not the handset can run the desired game. If a positive determination is made and the handset can support the game then the network server allows the downloading of the requested game to the end user's handset (block 550). If a negative determination is returned to the server the network server issues to the handset a message indicating the same, as given by block 560. Flow ends at block 570.

In another situation in which the comparator is located in the handset, a first end user (herein termed User A) requests a gaming session against a second end user (herein termed User B) through the network. In this situation the network server sends the requested game's Play Card to both end users i.e. User A and User B. Each of the respective handsets then check for compatibility of its handset specification against the Play Card. After making a determination on compliance, the handsets return respective responses to the network server. If both handsets can support game play the network initiates a gaming session between the two end users. If not, the network sends a message accordingly.

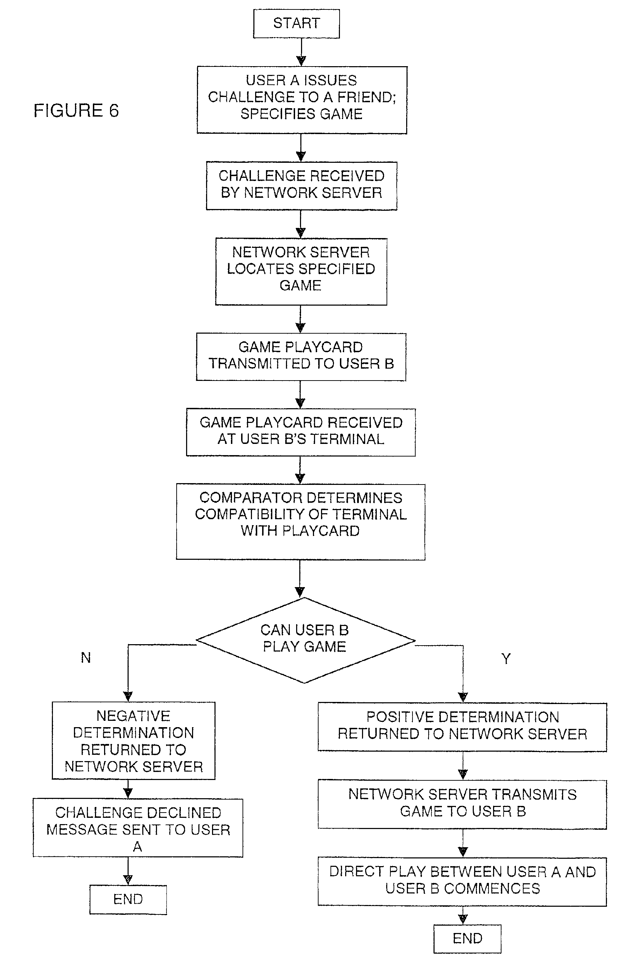

Figure 6 outlines a variant to this situation in which User A is already confirmed as a handset that can play the game and only User B's compatibility with the game is investigated. In this situation the Play Card is sent only to User B which carries out a check of the Play Card against the handset specification and returns a result indicating whether or not the handset can support the requested game play.

Conversely, the Play Card may be stored in the handset and the comparator may be provided in the server. In this situation, User A may request to play against User B and in doing so send a Play Card to the server. On receiving a response from User B the server obtains knowledge of the handset specification of User B (whether directly from User B's signal or some pre-stored information) and then carries out the necessary checks for facilitating gameplay.

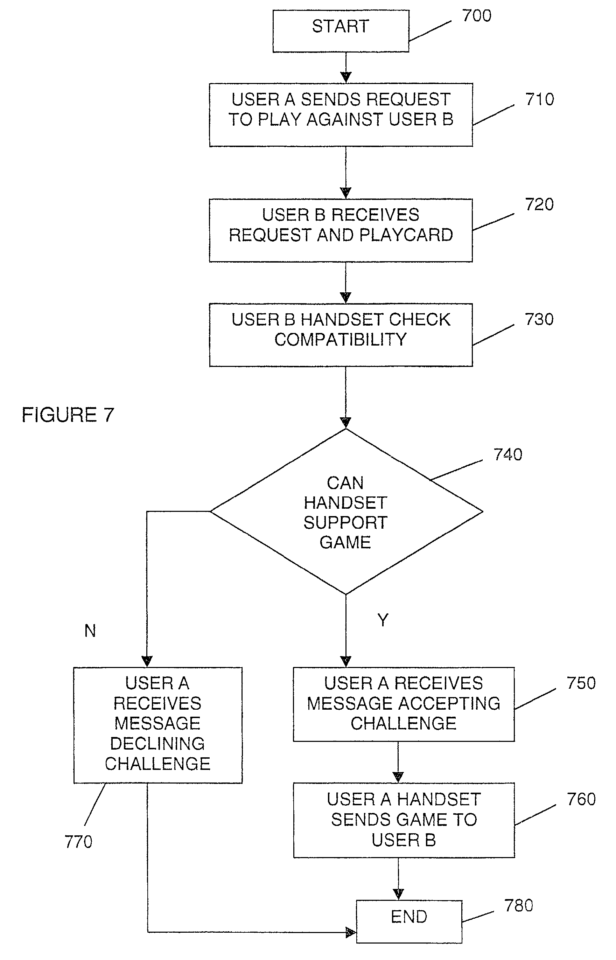

In a further alternative arrangement, the entire games management system is located in an end user's handset. In one form of this arrangement as illustrated in Figure 7, a first end user (herein termed User A) sends a request to play a game against a second end user (herein termed User B), as indicated in block 710. Accompanying the request is a signal including the Play Card of the game requested to be played. In other words User A's handset sends the Play Card to User B. The Play Card along with the challenge is received by User B via the network, see block 720. As indicated at blocks 730 and 740 User B's handset, which also includes the games management system, then carries out the process of checking whether it is capable of playing the requested game. If the comparator determines that User B's handset can support the game it returns a positive determination to User A's handset via the network accepting the challenge as given by block 750. On receipt of a positive determination User A's handset sends the game software to User B via the network as given by block 760. If the comparator in User B's handset makes a negative determination it sends a message to User A declining the challenge.

A variant of this situation may be that User B already has the same basic game as User A stored on his handset. In that case, in response to a challenge from User A to play the games management system checks that the version of the game stored in User B's handset is the same as the version stored on User A's handset. If the outcome of the check is positive, then gameplay can commence.

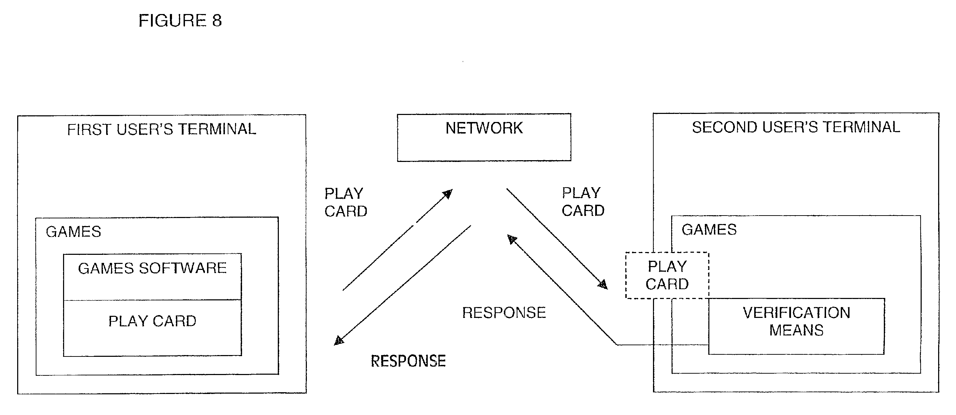

Figure 8 provides a schematic representation of the transfer of signals between the two handsets. User A's handset transmits a Play Card and User B's handset receives the Play Card. After compatibility checking, User B's handset transmits a response and User A's handset receives the response.

In the example given above, the network may be a cellular network, or it may be a local area network (LAN). In a variation of the above situation User A may issue the challenge and send the Play Card to User B as Bluetooth data, both handsets being Bluetooth enabled. Alternatively, the communication may be made by means of infra-red. The arrangement may be set up as a master/slave relationship in which User A's handset acts as a master and User B's handset acts as a slave. In this case, User A's handset carries out the events, sequences and instructions relating to the gameplay and sends these to User B. This is an example of a peer-to-peer communication. Alternatively, the communication could be a one-to-many session in which more than two users play the game. Again, in such a situation one of the users may act as the master terminal with the remaining players forming the slave terminals. In a variant of this example the data session could be initiated by TCPIP or by WAN.

In preferred implementations the Play Card would be formatted to support the appropriate game formats such as MID P Java (which may define certain generic requirements), Symbian OS, WinCE, PlamOS. Then as part of the games download, or in 3G with SIP (Session Initiated Protocol), since the user initiates a game session with his friends the Play Card would be sent either before the game is downloaded or as the game is downloaded.

In view of the foregoing, it should be appreciated that the present invention may be embodied in other specific forms without departing from its essential attributes. For example, the distribution of the elements of the system is implementation matter. Reference should thus be made to the appended claims and other general statements herein rather than to the foregoing description as indicating the scope of invention.

Furthermore, each feature disclosed in this specification (which term includes the claims) and/or shown in the drawings may be incorporated in the invention independently of other disclosed and/or illustrated features. In this regard, the invention includes any novel feature or combination of features disclosed herein either explicitly or any generalisation thereof irrespective of whether or not it relates to the claimed invention or mitigates any or all of the problems addressed.

The appended abstract as filed herewith is included in the specification by reference.

## Claims

1. A games management system for determining whether a portable terminal device can support gameplay of an electronic game, the system including a data portion associated with the electronic game having data indicative of one or more operating requirements for executing the game, and
a comparator for comparing said data against a specification of the portable terminal device.

2. A method for determining whether a portable terminal device can support gameplay of an electronic game, the method comprising:
providing a data portion associated with the electronic game having data indicative of one or more operating requirements for executing the game, and
a comparing said data against a specification of the portable terminal.

3. A games management system for determining whether a server can support gameplay of an electronic game, the system including a data portion associated with an electronic game having data indicative of one or more operating requirements for executing the game, and
a comparator for comparing said data against a specification of the server.

4. A method for determining whether a server can support gameplay of an electronic game, the method comprising:
providing a data portion associated with the electronic game having data indicative of one or more operating requirements for executing the game, and
a comparing said data against a specification of the server.

5. A computer program product on a carrier comprising means for providing a data portion associated with an electronic game having data indicative of one or more operating requirements for executing the game, and
means for a comparing said data against a specification of a handset/ server.

6. A computer program product for an electronic game and stored on a carrier, wherein the product includes a data portion associated with the electronic game having data indicative of one or more operating requirements for executing the game.

7. A data portion associated with an electronic game, wherein said data portion comprises data indicative of one or more operating requirements for playing the game.

8. A portable radio communication device comprising a memory operable to store a data portion associated with an electronic game having data indicative of one or more operating requirements for executing the game, and
a transmitter operable to transmit said data portion.

9. A portable radio communication device comprising a receiver operable to receive a data portion associated with an electronic game having data indicative of one or more operating requirements for executing the game, and
a controller operable to compare said data against a specification of the portable radio communication device.

10. A server including a games management system for determining whether a portable terminal device can support gameplay of an electronic game, the system including a data portion associated with the electronic game having data indicative of one or more operating requirements for executing the game, and
a comparator for comparing said data against a specification of the portable terminal device.

11. A games management system according to claim 1, wherein a portion of the system is provided on a server, and a further portion of the system is provided on a handheld terminal device.
